(19) Europäisches Patentamt
European Patent Office
Office européen des brevets

(11) **EP 4 431 934 A1**

(12) **EUROPEAN PATENT APPLICATION**
published in accordance with Art. 153(4) EPC

(43) Date of publication:
**18.09.2024 Bulletin 2024/38**

(21) Application number: **22892650.7**

(22) Date of filing: **31.10.2022**

(51) International Patent Classification (IPC):
**G01N 29/024** (2006.01)

(52) Cooperative Patent Classification (CPC):
**G01N 29/024**

(86) International application number:
**PCT/JP2022/040654**

(87) International publication number:
**WO 2023/085151 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.11.2021  JP 2021184737**

(71) Applicants:
• **Nisshinbo Holdings Inc.**
**Tokyo 103-8650 (JP)**
• **Japan Radio Co., Ltd.**
**Mitaka-shi, Tokyo 181-0002 (JP)**

• **Ueda Japan Radio Co., Ltd.**
**Ueda-shi, Nagano 386-8608 (JP)**

(72) Inventors:
• **SHINFUKU, Yoshifumi**
**Mitaka-shi, Tokyo 181-0002 (JP)**
• **SEKI, Takuya**
**Ueda-shi, Nagano 386-8608 (JP)**

(74) Representative: **Wunderlich & Heim**
**Patentanwälte**
**PartG mbB**
**Irmgardstraße 3**
**81479 München (DE)**

(54) **GAS CONCENTRATION MEASUREMENT DEVICE**

(57)     The purpose of the present invention is to simply and accurately measure a gas concentration. This gas concentration measurement device (100) comprises: a concentration measurement space (22); a transmission unit (14) which transmits an ultrasonic wave to the concentration measurement space (22) in response to a transmission signal; a reception unit (16) which receives the ultrasonic wave propagated through the concentration measurement space (22), and outputs a reception signal; and an analysis unit (18). The analysis unit (18) obtains a space propagation time in the concentration space (22) on the basis of a timing at which the transmission signal is input to the transmission unit 14 and a timing at which the reception signal is output from the reception unit 16, and obtains the concentration of a gas to be measured on the basis of the space propagation time. The analysis unit 18 obtains a correction value for a direct wave-type propagation time on the basis of the direct wave-type propagation time and a reflective wave-type propagation time, and obtains a space propagation time on the basis of: the corrected propagation time obtained by correcting the direct wave-type propagation time on the basis of the correction value; or one of the direct wave-type propagation time or a value related thereto in the reflection wave-type propagation time.

FIG. 1

EP 4 431 934 A1

**Description**

TECHNICAL FIELD

The present disclosure relates to a gas concentration measurement apparatus, and in particular to an apparatus which measures a gas concentration based on a propagation time of ultrasound in a concentration measurement space.

BACKGROUND

Research and development are widely carried out for fuel cell vehicles which travel with electric power supplied from a fuel cell. A fuel cell generates electric power utilizing a chemical reaction between hydrogen and oxygen. In general, hydrogen is supplied to the fuel cell as a fuel, and oxygen is taken into the fuel cell from surrounding air. The fuel cell vehicle is equipped with a hydrogen tank, and hydrogen is supplied from the hydrogen tank to the fuel cell. When an amount of hydrogen in the hydrogen tank becomes low, hydrogen is supplied from a hydrogen supply apparatus provided in a service station to the hydrogen tank of the fuel cell vehicle.

Because hydrogen is a combustible gas, it is necessary to monitor for leakage of hydrogen from the fuel cell vehicle and the hydrogen supply apparatus. For this purpose, a hydrogen concentration measurement apparatus is widely in use in fuel cell vehicles and hydrogen supply apparatuses. The hydrogen concentration measurement apparatus has functions such as measuring concentration of hydrogen contained in air, or sending an alert when the hydrogen concentration becomes greater than a predetermined value.

Patent Literature 1 discloses an apparatus which measures concentration of a particular gas. This apparatus measures the concentration of the particular gas based on a propagation velocity of ultrasound in air which is the measurement target. A propagation time from transmission of the ultrasound from a transmitter to reception, by a receiver, of the ultrasound that has propagated through a measurement section within the concentration measurement space is measured, a propagation velocity is measured based on the propagation time, and the concentration of the gas is then measured.

Patent Literature 2 discloses a gas concentration sensor which transmits ultrasound to a measurement chamber, receives a reflected wave that has been reflected by a wall surface of the measurement chamber, determines a propagation time, which is a time of propagation of the ultrasound through the measurement chamber, and determines a propagation velocity, to thereby detect a concentration of gas to be measured. Patent Literature 2 discloses that the propagation time is determined based on a difference between a time of reception of a first reflected wave which is received by an ultrasound element at an earlier time, and a time of reception of a second reflected wave which is received by the ultrasound element at a later time.

CITATION LIST

PATENT LITERATURE

    Patent Literature 1: JP 2018-100916 A
    Patent Literature 2: JP 2000-249691 A

SUMMARY

TECHNICAL PROBLEM

In the present disclosure, the method as described in Patent Literature 1, in which the propagation time from transmission of the ultrasound from the transmitter to the reception, by the receiver, of the ultrasound that has propagated through the measurement section in the concentration measurement space is measured, will be referred to as a direct wave method. On the other hand, the method as described in Patent Literature 2, in which the ultrasound is transmitted to the measurement chamber, and the propagation time is determined based on the difference between the time of reception of the first ultrasound received by the ultrasound element at an earlier time and the time of reception of the second ultrasound received by the ultrasound element at a later time, will be referred to as a reflected wave method.

In the direct wave method, a process for compensating for delay times of signals at the transmitter and the receiver is required, and the number of processes necessary for the measurement may become large. In the reflected wave method, although it is not necessary to compensate for the delay times, when the distance of propagation of the ultrasound is short or when the propagation velocity is large, the first ultrasound and the second ultrasound may overlap on the time axis, making it difficult to measure the propagation time.

An advantage of the present disclosure lies in simply and accurately performing measurement of gas concentration .

SOLUTION TO PROBLEM

According to one aspect of the present disclosure, there is provided a gas concentration measurement apparatus comprising: a concentration measurement space in which a concentration of a gas is measured; a transmitter that transmits ultrasound to the concentration measurement space in response to a transmission signal; a receiver that receives ultrasound that has propagated through the concentration measurement space, and that outputs a reception signal; and an analyzer that determines a space propagation time, which is time of propagation of the ultrasound through the concentration measurement space, based on a point in time at which the transmission signal is input to the transmitter, and a point in time at which the reception signal is output from the receiver, and that determines a concentration of a gas which is a measurement target based on the space propagation time, wherein the analyzer: determines, based on a direct wave method propagation time determined using a direct wave method and a reflected wave method propagation time determined using a reflected wave method, a correction value for the direct wave method propagation time; and determines the space propagation time based on one of a corrected propagation time obtained by correcting the direct wave method propagation time based on the correction value, or the reflected wave method propagation time, according to the direct wave method propagation time or a value related thereto, the direct wave method being a measurement method in which the direct wave method propagation time is determined based on a difference between a point in time of transmission at which the transmission signal is input to the transmitter, and a first point in time of reception at which the reception signal is output from the receiver a first time after the transmission signal is input to the transmitter, and the reflected wave method being a measurement method in which the reflected wave method propagation time is determined based on a difference between the first point in time of reception and a second point in time of reception at which the reception signal is output from the receiver a second time after the transmission signal is input to the transmitter.

Desirably, in the gas concentration measurement apparatus of claim 1, the analyzer determines the correction value based on the direct wave method propagation time and the reflected wave method propagation time when a condition of the direct wave method propagation time being greater than or equal to a predetermined background process threshold is satisfied.

Desirably, the analyzer determines the space propagation time based on the corrected propagation time when a condition of the direct wave method propagation time being less than a predetermined method switching threshold, which is greater than the background process threshold, is satisfied.

Desirably, the analyzer determines the space propagation time based on the reflected wave method propagation time when a condition of the direct wave method propagation time being greater than or equal to a predetermined method switching threshold, which is greater than the background process threshold, is satisfied.

According to another aspect of the present disclosure, there is provided a gas concentration measurement apparatus comprising: a concentration measurement space in which a concentration of a gas is measured; a transmitter that transmits ultrasound to the concentration measurement space in response to a transmission signal; a receiver that receives ultrasound that has propagated through the concentration measurement space, and that outputs a reception signal; and an analyzer that determines a space propagation time, which is a time of propagation of the ultrasound through the concentration measurement space, based on a point in time at which the transmission signal is input to the transmitter, and a point in time at which the reception signal is output from the receiver, and that determines a concentration of a gas which is a measurement target based on the space propagation time, wherein the analyzer: determines, based on a direct wave method propagation time determined through a direct wave method and a reflected wave method propagation time determined through a reflected wave method, a correction value for the direct wave method propagation time; repeatedly executes measurement of propagation time through the direct wave method and the reflected wave method; and selects one of a corrected propagation time obtained by correcting the direct wave method propagation time based on the correction value, or the reflected wave method propagation time, according to a change over time of the direct wave method propagation time and a change over time of the reflected wave method propagation time, and determines the space propagation time based on the selected one of the corrected propagation time or the reflected wave method propagation time, the direct wave method being a measurement method in which the direct wave method propagation time is determined based on a difference between a point in time of transmission at which the transmission signal is input to the transmitter, and a first point in time of reception at which the reception signal is output from the receiver a first time after the transmission signal is input to the transmitter, and the reflected wave method being a measurement method in which the reflected wave method propagation time is determined based on a difference between the first point in time of reception and a second point in time of reception at which the reception signal is output from the receiver a second time after the transmission signal is input to the transmitter.

Desirably, the analyzer: recognizes one of the direct wave method propagation time and the reflected wave

EP 4 431 934 A1

method propagation time as a primary propagation time, and the other of the direct wave method propagation time and the reflected wave method propagation time as a secondary propagation time, according to the direct wave method propagation time or a value related thereto; and determines the space propagation time based on the secondary propagation time when an absolute value of a change over time of the primary propagation time is greater than or equal to a predetermined change threshold, and an absolute value of a change over time of the secondary propagation time is less than the predetermined change threshold.

Desirably, the analyzer: recognizes one of the direct wave method propagation time and the reflected wave method propagation time as a primary propagation time, and the other of the direct wave method propagation time and the reflected wave method propagation time as a secondary propagation time, according to the direct wave method propagation time or a value related thereto; and determines the space propagation time based on the primary propagation time when an absolute value of a change over time of the primary propagation time is greater than or equal to a predetermined change threshold, and an absolute value of a change over time of the secondary propagation time is greater than or equal to the predetermined change threshold.

Desirably, the analyzer selects the reflected wave method propagation time as the primary propagation time when a condition of the direct wave method propagation time being greater than or equal to a predetermined method switching threshold is satisfied.

Desirably, the analyzer selects the direct wave method propagation time as the primary propagation time when a condition of the direct wave method propagation time being less than a predetermined method switching threshold is satisfied.

ADVANTAGEOUS EFFECTS

According to an aspect of the present disclosure, measurement of the gas concentration can be performed simply and accurately.

BRIEF DESCRIPTION OF DRAWINGS

FIG. 1 is a diagram showing a structure of a gas concentration measurement apparatus according to an embodiment of the present disclosure.

FIG. 2 is a diagram schematically showing a time waveform of a reception signal.

FIG. 3 is a diagram conceptually showing a direct wave method propagation time $T_\beta$ with respect to an actual space propagation time $T_0$, and a reflected wave method propagation time $T_\alpha$ with respect to the actual space propagation time $T_0$.

FIG. 4 is a diagram showing a relationship between hydrogen concentration and propagation velocity.

FIG. 5 is a diagram showing through which of a direct wave method or a reflected wave method a gas concentration measurement is performed, in relation to the direct wave method propagation time $T_\beta$.

DESCRIPTION OF EMBODIMENTS

(1) Structure of a gas concentration measurement apparatus and a basic process performed by the gas concentration measurement apparatus

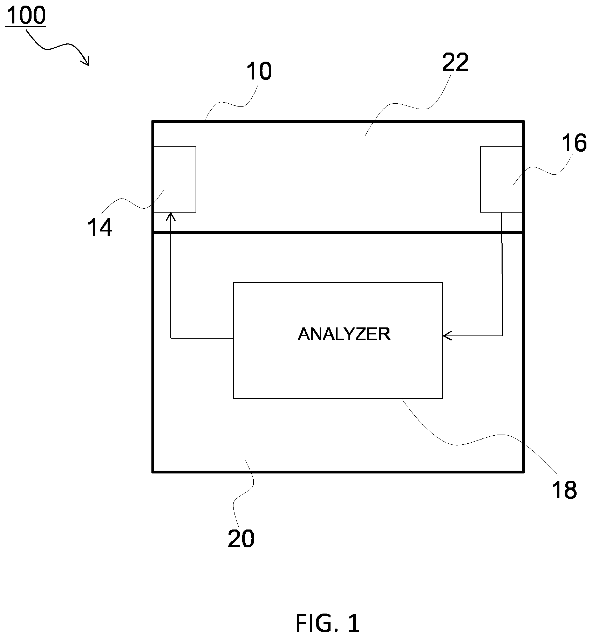

FIG. 1 shows a structure of a gas concentration measurement apparatus 100 according to an embodiment of the present disclosure. The gas concentration measurement apparatus 100 includes a housing 10, a transmitter 14, a receiver 16, and an analyzer 18. The housing 10 forms an analyzer housing space 20 and a concentration measurement space 22. The concentration measurement space 22 is a space having a tubular shape with respective ends blocked. The transmitter 14 is placed at one end of the concentration measurement space 22, and the receiver 16 is placed at the other end.

The analyzer 18 is housed in the analyzer housing space 20. The analyzer 18 may be formed from a processor that executes a program which is read in advance. The processor may be fixed in the analyzer housing space 20, in a state of being fixed on a substrate.

Each of the transmitter 14 and the receiver 16 has an ultrasound transducer. The transmitter 14 and the receiver 16 are connected to the analyzer 18. The transmitter 14 transmits ultrasound to the concentration measurement space 22 according to control by the analyzer 18. That is, the analyzer 18 outputs a transmission signal which is an electric signal to the transmitter 14. The transmitter 14 converts the transmission signal to ultrasound, and transmits the ultrasound. The receiver 16 receives ultrasound that has propagated through the concentration measurement space 22. The receiver 16 converts the received ultrasound to a reception signal which is an electric signal, and outputs the reception signal to the analyzer 18.

The analyzer 18 determines a space propagation time, which is a time of propagation of the ultrasound through the concentration measurement space 22, based on a point in time of input of the transmission signal to the transmitter 14, and a point in time of output of the reception signal from the receiver 16, and determines a concentration of a gas which is a measurement target, based on the space propagation time.

The analyzer 18 determines the space propagation time required for the ultrasound to propagate from the one end to the other end of the concentration measurement space 22 using one measurement method of either a direct wave method or a reflected wave method. The selection of which measurement method is to be used for determining the space propagation time will be described later. The direct wave method is a measurement method in which the propagation time (a direct wave method propagation time $T_{\beta}$) is determined based on a difference between a point in time of transmission at which the transmission signal is output from the analyzer 18 to the transmitter 14 and a first point in time of reception at which the reception signal is output from the receiver 16 a first time after the transmission signal is output. The difference between the point in time of transmission and the first point in time of reception (time difference) may be determined by subtracting time indicating the point in time of transmission from time indicating the first point in time of reception. The reception signal which is output from the receiver 16 for the first time corresponds to direct ultrasound which is received by the receiver 16 a first time. The direct ultrasound is ultrasound which is transmitted from the transmitter 14, propagates from the one end to the other end through the concentration measurement space 22, and is received by the receiver 16.

The reflected wave method is a measurement method in which the propagation time (a reflected wave method propagation time $T_{\alpha}$) is determined based on a difference between the first point in time of reception and a second point in time of reception at which the reception signal is output from the receiver 16 a second time after the transmission signal is output. The difference between the first point in time of reception and the second point in time of reception (time difference) may be determined by subtracting the time indicating the first point in time of reception from time indicating the second point in time of reception. The reception signal which is output from the receiver 16 the second time corresponds to reflected ultrasound which propagates through the concentration measurement space 22 for one and a half round trips after being transmitted from the transmitter 14, and is received by the receiver 16. That is, the reflected ultrasound is ultrasound which is transmitted from the transmitter 14, propagates from the one end to the other end through the concentration measurement space 22, is reflected at the other end, propagates from the other end to the one end through the concentration measurement space 22, is reflected at the one end, propagates through the concentration measurement space 22, and is received by the receiver 16.

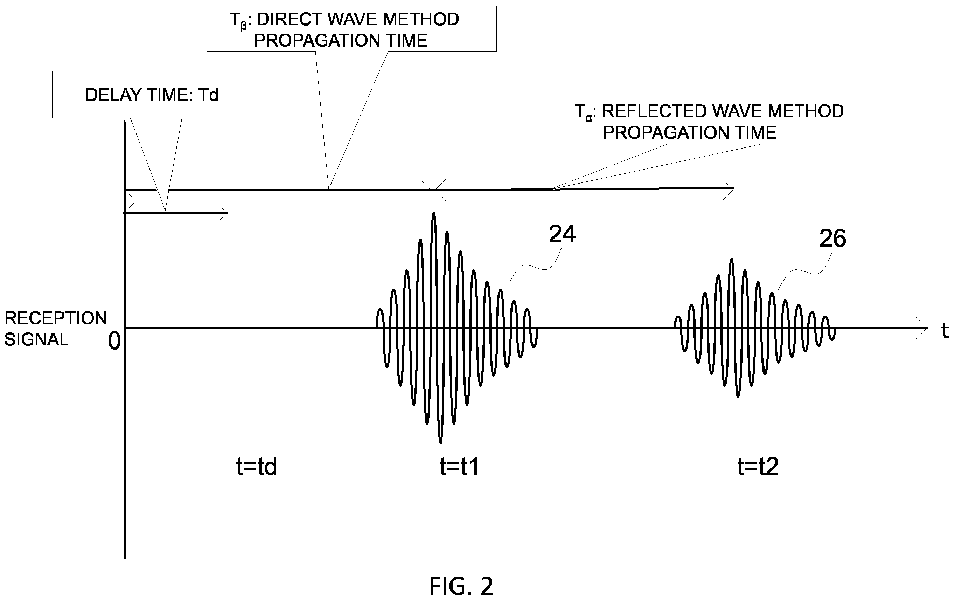

FIG. 2 schematically shows a time waveform of the reception signal which is output from the receiver 16. At time t=0, the transmission signal is output from the analyzer 18 to the transmitter 14. Each reception signal which is output from the receiver 16 to the analyzer 18 has a time waveform of a sine wave shape to which amplitude modulation is applied in a pulse form. The reception signal which is output from the receiver 16 the first time (a direct wave reception signal 24) has a maximum absolute value of a wave height at time t=t1. The reception signal which is output from the receiver 16 the second time (a reflected wave reception signal 26) has a maximum absolute value of the wave height at time t=t2, which is later than the time t=t1.

(2) Reflected wave method

Measurement of the gas concentration through the reflected wave method will now be described with reference to FIG. 1. The analyzer 18 outputs the transmission signal to the transmitter 14. The analyzer 18 stores a time waveform of the direct wave reception signal 24 which is output from the receiver 16, and a time waveform of the reflected wave reception signal 26 which is output from the receiver 16. The analyzer 18 determines a correlation value between a shifted signal obtained by provisionally advancing the reflected wave reception signal 26 by a shift time $\tau$, and the direct wave reception signal 24. The analyzer 18 determines a shift time $\tau$ which results in the maximum correlation value as the reflected wave method propagation time $T_{\alpha}$.

Alternatively, when the reflected wave method propagation time $T_{\alpha}$ is determined, Euclid distance may be employed in place of the correlation value. The Euclid distance is defined as a square root of a value obtained by time-integrating a square of a difference of two signals. When the Euclid distance is determined, for example, the magnitude(s) of one or both signals may be adjusted so that the maximum values of the two signals become equal to each other. A smaller Euclid distance means a higher degree of similarity between the two signals.

The analyzer 18 determines a value of a half of the reflected wave method propagation time $T_{\alpha}$ as a space propagation time T. The space propagation time T is time required for the ultrasound to propagate from the one end to the other end through the concentration measurement space 22. A concentration calculation formula (Formula (1)) is widely known, which represents a relationship between a propagation velocity of the ultrasound and the concentration of a particular gas contained in the gas through which the ultrasound propagates. The analyzer 18 uses the concentration calculation formula (Formula (1)) or a formula having the same meaning, to determine the concentration of the gas from the space propagation time T and a length L of the concentration measurement space 22.

[Formula (1)]

$$p = \frac{1}{M_h - M_a}\left(kRT_{mp}\Big/(L/T)^2 - M_a\right)$$

Here, k represents a specific-heat ratio of the gas, R represents the gas constant, and $T_{mp}$ represents a temperature of the concentration measurement space 22. $M_h$ represents a molecular weight of the gas which is the measurement target, and $M_a$ represents a molecular weight of air excluding the measurement target gas. When the composition of the air is assumed to be only 80% nitrogen and 20% oxygen, the specific-heat ratio k may be taken to be 1.4. The gas constant R is 8.31, and the molecular weight $M_a$ of the air is 28.8. When the measurement target gas is hydrogen, the molecular weight $M_h$ is 2.0. The term L/T in (Formula (1)) represents the propagation velocity of the ultrasound.

(3) Direct wave method

Next, measurement of the gas concentration using the direct wave method will be described with reference to FIG. 1. The analyzer 18 outputs the transmission signal to the transmitter 14. The analyzer 18 stores a time waveform of the transmission signal and a time waveform of the direct wave reception signal 24 which is output from the receiver 16. The analyzer 18 determines a correlation value between a shifted signal, obtained by provisionally advancing the direct wave reception signal 24 by a shift time τ, and the transmission signal. The correlation value indicates a degree of similarity between the time waveforms of the two signals. The analyzer 18 determines a shift time τ at which the correlation value becomes the maximum as the direct wave method propagation time $T_\beta$. Alternatively, when the direct wave method propagation time $T_\beta$ is determined, the Euclid distance may be employed in place of the correlation value.

The analyzer 18 may determine the direct wave method propagation time $T_\beta$ based on a time from appearance of a zero-cross point immediately after a peak of a positive or negative wave height of the transmission signal to appearance of a zero-cross point immediately after a peak of a positive or negative wave height of the reception signal which is output from the receiver 16 the first time. Here, the zero-cross point refers to an intersection between the time waveform of the signal and the time axis.

As shown in FIG. 2, the time from the output of the transmission signal by the analyzer 18 to the transmitter 14 to the output of the reception signal from the receiver 16 to the analyzer 18 includes a delay time Td including a transmission delay time and a reception delay time. Here, the transmission delay time is a time from the output of the transmission signal by the analyzer 18 to the transmission of the ultrasound by the transmitter 14, and the reception delay time is a time from the reception of the ultrasound by the receiver 16 to the output of the reception signal by the receiver 16 to the analyzer 18.

The analyzer 18 determines a corrected propagation time obtained by adding a correction value Δβ = -Td, which is the delay time Td with the polarity inverted, to the direct wave method propagation time $T_\beta$, and sets the corrected propagation time as the space propagation time T. The correction value Δβ may be repeatedly determined at a predetermined time interval based on a background process to be described below.

The background process may be performed along with or separately from the measurement of the gas concentration. The background process is a process for determining the correction value Δβ based on a reflected wave method propagation time $T_{\alpha 0}$ and a direct wave method propagation time $T_{\beta 0}$. The reflected wave method propagation time $T_{\alpha 0}$ is determined, the direct wave method propagation time $T_{\beta 0}$ is determined, and a correction target value $\Delta\beta_0$ is determined based on the following Formula (2). Further, the correction value Δβ is modified so that the correction value Δβ becomes close to or coincides with the correction target value $\Delta\beta_0$.

[Formula (2)]

$$\Delta\beta_0 = \frac{T_{\alpha 0}}{2} - T_{\beta 0}$$

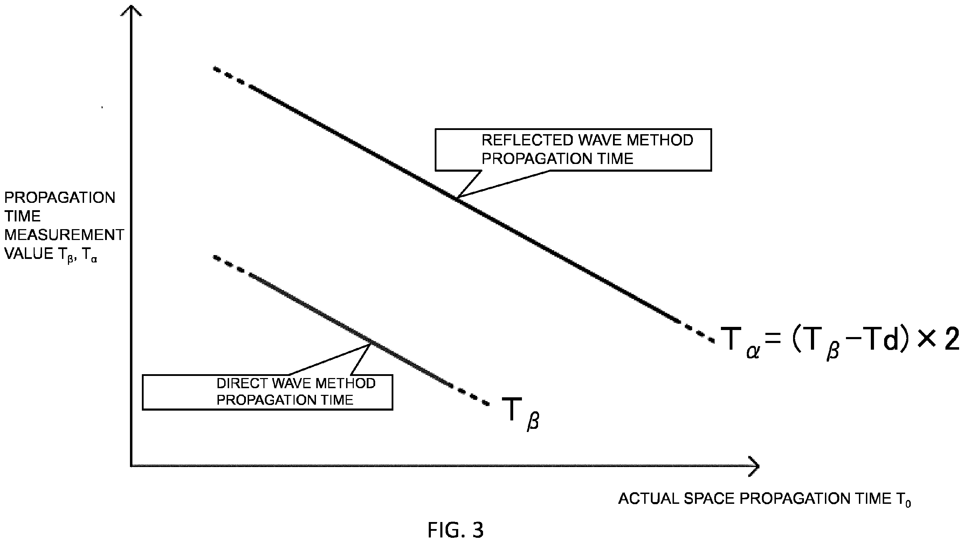

Physical implication of Formula (2) will now be described. FIG. 3 conceptually shows the direct wave method propagation time $T_\beta$ with respect to an actual space propagation time $T_0$, and the reflected wave method propagation time $T_\alpha$ with respect to the actual space propagation time $T_0$. The reflected wave method propagation time $T_\alpha$ is equal to a value obtained by subtracting the delay time Td from the direct wave method propagation time $T_\beta$ and multiplying the result by 2, and a relationship of $T_\alpha = (T_\beta\text{-Td})\times 2$ is satisfied. Formula (2) is obtained by solving this equation for the correction value, -Td, replacing -Td with $\Delta\beta_0$, and replacing $T_\beta$ and $T_\alpha$ with $T_{\beta 0}$ and $T_{\alpha 0}$, respectively.

The analyzer 18 may determine an error which is a value obtained by subtracting the correction target value $\Delta\beta_0$ from the correction value $\Delta\beta$ which is already determined, and may determine a new correction value $\Delta\beta$ through proportional integral control based on this error. Alternatively, the analyzer 18 may determine a new correction value $\Delta\beta$ by setting the correction target value $\Delta\beta_0$ as the correction value $\Delta\beta$. The analyzer 18 stores the newly determined correction value $\Delta\beta$, until the correction value $\Delta\beta$ is next determined.

The analyzer 18 determines the corrected propagation time obtained by adding the correction value $\Delta\beta$ to the direct wave method propagation time $T_\beta$ determined for the measurement of the gas concentration, and sets the corrected propagation time as the space propagation time T. The analyzer 18 further determines the gas concentration using Formula (1).

(4) Switching of measurement method

In the measurement of the gas concentration through the direct wave method, it is necessary to determine the correction value $\Delta\beta$ in advance, in order to determine the space propagation time T. On the other hand, in the measurement of the gas concentration through the reflected wave method, the in-advance determination of the correction value $\Delta\beta$ is not necessary. The reason for this is that, in the measurement of the gas concentration through the reflected wave method, the reflected wave method propagation time $T_\alpha$ from the output of the reception signal from the receiver 16 the first time to the output of the reception signal the second time does not include the delay time Td. In other words, the delay time Td is cancelled out in the process of determining the time difference between the first point in time of reception and the second point in time of reception.

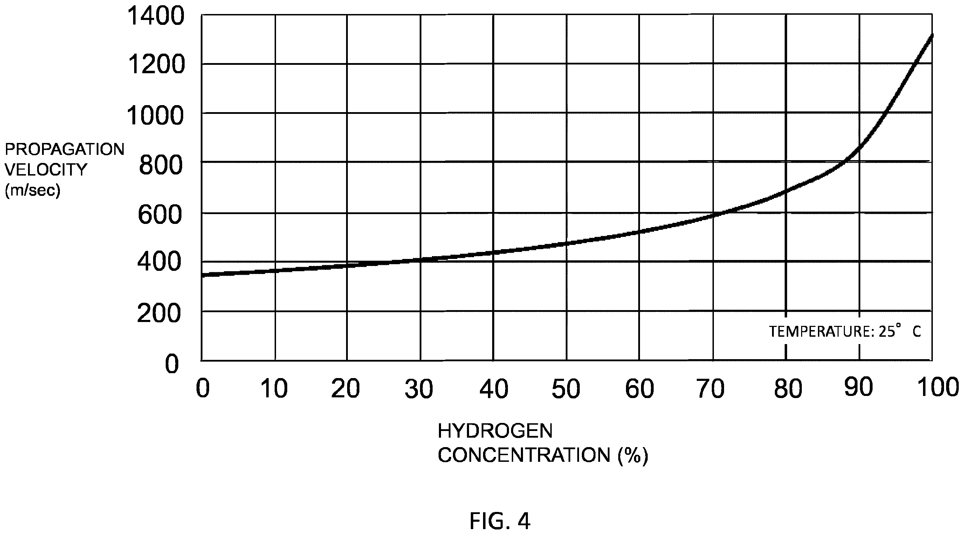

However, in the measurement of the gas concentration through the reflected wave method, the following problem exists. In general, when the gas concentration becomes large, the propagation velocity of the ultrasound becomes larger. FIG. 4 shows a relationship between the hydrogen concentration and the propagation velocity when the temperature is 25°. The horizontal axis shows the hydrogen concentration (%), and the vertical axis shows the propagation velocity (m/sec). As shown in FIG. 4, the propagation velocity increases with increase of the hydrogen concentration. Moreover, a change of the propagation velocity with respect to a change of the hydrogen concentration (slope) tends to become larger as the hydrogen concentration becomes larger. Such a property also applies to other gases.

Therefore, as the gas concentration becomes larger, the time of propagation through the concentration measurement space 22 becomes shorter, and the reflected wave method propagation time $T_\alpha$ becomes smaller. That is, the time from the output of the direct wave reception signal from the receiver 16 to the output of the reflected wave reception signal 26 becomes shorter. As a consequence, the time waveform of the direct wave reception signal 24 and the time waveform of the reflected wave reception signal 26 may overlap each other on the time axis, resulting in possible degradation of the measurement precision of the reflected wave method propagation time $T_\alpha$. On the other hand, in the measurement of the gas concentration through the direct wave method, because the reflected wave reception signal 26 does not overlap a head portion of the time waveform of the direct wave reception signal 24, the measurement of the direct wave method propagation time $T_\beta$ is performed relatively accurately.

In consideration of the above, in the gas concentration measurement apparatus 100 of the present embodiment, the direct wave method propagation time $T_\beta$ and the reflected wave method propagation time $T_\alpha$ are repeatedly measured at a predetermined time interval, and the analyzer 18 performs the following process each time measurement is performed. Specifically, the analyzer 18 measures the gas concentration through the reflected wave method when the direct wave method propagation time $T_\beta$ is greater than or equal to a method switching threshold tc which is determined in advance. On the other hand, when the direct wave method propagation time $T_\beta$ is less than the method switching threshold tc, the analyzer 18 measures the gas concentration through the direct wave method.

For the measurement of the gas concentration through the direct wave method, the correction value $\Delta\beta$ for the direct wave method propagation time $T_\beta$ is necessary. The analyzer 18 updates the correction value $\Delta\beta$ when the direct wave method propagation time $T_\beta$ is greater than or equal to a background process threshold tb which is determined in advance. That is, the analyzer 18 performs the background process at a predetermined time interval to determine the correction value $\Delta\beta$, replaces the correction value $\Delta\beta$ which has been stored with the new correction value $\Delta\beta$, and stores the new correction value $\Delta\beta$. The background process threshold tb may be less than the method switching threshold tc.

When the direct wave method propagation time $T_\beta$ is less than the background process threshold tb, the analyzer 18 does not perform the background process, and maintains the value of the correction value $\Delta\beta$ at the current value. When the background process has not been performed even once in the past, the analyzer 18 may store an initial

correction value $\Delta\beta$ determined through experiments or a simulation.

(5) Judgment based on direct wave method propagation time $T_\beta$

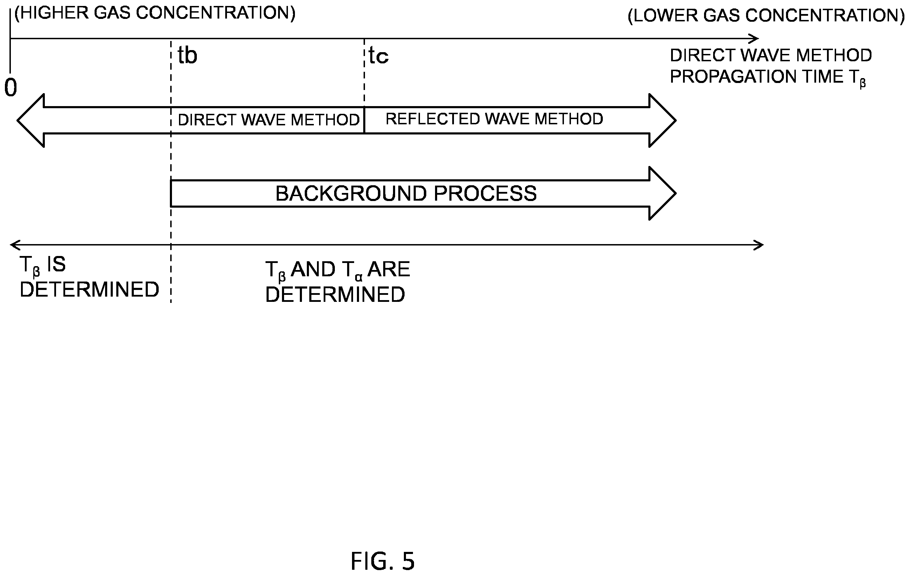

FIG. 5 shows through which of the direct wave method or the reflected wave method the measurement of the gas concentration is to be performed for the direct wave method propagation time $T_\beta$. FIG. 5 further shows a range of the direct wave method propagation time $T_\beta$ when the background process is performed. The judgment of which of the direct wave method or the reflected wave method is to be used for the measurement of the gas concentration, and the judgment of whether or not the background process is to be performed, are made based on the direct wave method propagation time $T_\beta$.

When the direct wave method propagation time $T_\beta$ is less than the background process threshold tb, the analyzer 18 may only determine the direct wave method propagation time $T_\beta$, and may avoid the determination of the reflected wave method propagation time $T_\alpha$. The analyzer 18 maintains the state in which the value of the correction value $\Delta\beta$ which has been determined previously is stored.

When the direct wave method propagation time $T_\beta$ is greater than or equal to the background process threshold tb, the analyzer 18 determines not only the direct wave method propagation time $T_\beta$, but also the reflected wave method propagation time $T_\alpha$. The analyzer 18 determines the correction target value $\Delta\beta_0$ based on Formula (2) by setting the direct wave method propagation time $T_\beta$ determined at the current time as $T_{\beta 0}$, and the reflected wave method propagation time $T_\alpha$ determined at the current time as $T_{\alpha 0}$. The analyzer 18 updates the correction value $\Delta\beta$ such that the correction value $\Delta\beta$ coincides with or becomes close to the correction target value $\Delta\beta_0$, and stores the updated correction value $\Delta\beta$.

When the direct wave method propagation time $T_\beta$ is less than the method switching threshold tc, the analyzer 18 measures the gas concentration through the direct wave method. That is, the analyzer 18 adds the correction value $\Delta\beta$ to the direct wave method propagation time $T_\beta$, to determine the space propagation time T (corrected propagation time), and determines the gas concentration based on the space propagation time T. When the direct wave method propagation time $T_\beta$ is greater than or equal to the method switching threshold tc, the analyzer 18 measures the gas concentration through the reflected wave method. That is, the analyzer 18 sets the reflected wave method propagation time $T_\alpha$ as the space propagation time T, and determines the gas concentration based on the space propagation time T.

In this manner, the analyzer 18 determines the space propagation time T based on one of the corrected propagation time obtained by correcting the direct wave method propagation time $T_\beta$ based on the correction value $\Delta\beta$, or the reflected wave method propagation time $T_\alpha$, according to the direct wave method propagation time $T_\beta$. According to the process performed by the analyzer 18, when the reflected wave method propagation time $T_\alpha$ is determined with high precision, that is, when the direct wave method propagation time $T_\beta$ is greater than or equal to the method switching threshold tc, the gas concentration is determined based on the reflected wave method propagation time $T_\alpha$. When the reflected wave method propagation time $T_\alpha$ cannot be determined with high precision, that is, when the direct wave method propagation time $T_\beta$ is less than the method switching threshold tc, the gas concentration is determined based on the direct wave method propagation time $T_\beta$.

When the direct wave method propagation time $T_\beta$ is less than the method switching threshold tc, the gas concentration is higher compared to the case where the direct wave method propagation time $T_\beta$ is greater than or equal to the method switching threshold tc, and the change of the propagation velocity with respect to the change of the gas concentration is large. Therefore, high measurement precision (small error ratio) for the gas concentration is not required compared to the case where the direct wave method propagation time $T_\beta$ is greater than or equal to the method switching threshold tc, and the gas concentration may be measured through the direct wave method, in which the measurement is simple. On the other hand, when the direct wave method propagation time $T_\beta$ is greater than or equal to the method switching threshold tc, high measurement precision for the gas concentration is required compared to the case where the direct wave method propagation time $T_\beta$ is less than the method switching threshold tc, and the gas concentration may be measured through the reflected wave method. In this manner, according to the gas concentration measurement apparatus 100 of the present embodiment, the gas concentration can be measured simply and with high precision for a wide range of direct wave method propagation time $T_\beta$, that is, for a wide range of the gas concentration.

In addition, in the gas concentration measurement apparatus 100 of the present disclosure, even when the direct wave method propagation time $T_\beta$ is less than the method switching threshold tc, the background process is performed if the direct wave method propagation time $T_\beta$ is greater than or equal to the background process threshold tb. With this configuration, the correction value $\Delta\beta$ is determined for a range of the reflected wave method propagation time $T_\alpha$ in which sufficient precision can be ensured, and the correction value $\Delta\beta$ is determined for a wide range.

(6) Process for suppressing errors which occur randomly

In the gas concentration measurement apparatus 100, random errors may be caused in the direct wave method propagation time $T_\beta$ or in the reflected wave method propagation time $T_\alpha$ due to vibration of the housing 10 or the like.

In consideration of this, the analyzer 18 may determine the space propagation time T by selectively using the direct wave method propagation time $T_\beta$ or the reflected wave method propagation time $T_\alpha$ when the direct wave method propagation time $T_\beta$ is greater than or equal to the background process threshold tb, and may measure the gas concentration.

In this case, the analyzer 18 selects the propagation time according to a change over time of the direct wave method propagation time $T_\beta$ and a change over time of the reflected wave method propagation time $T_\alpha$. That is, the analyzer 18 selects one of the corrected propagation time obtained by correcting the direct wave method propagation time $T_\beta$ based on the correction value $\Delta\beta$, or the reflected wave method propagation time $T_\alpha$, and determines the space propagation time T based on the selected one of the propagation times.

(6-1) When direct wave method propagation time $T_\beta$ is less than method switching threshold tc

A first process will be described, which is executed when the direct wave method propagation time $T_\beta$ is less than the method switching threshold tc. In the first process, the analyzer 18 recognizes the direct wave method propagation time $T_\beta$ as a primary propagation time, and recognizes the reflected wave method propagation time $T_\alpha$ as a secondary propagation time.

When an absolute value of a change over time of the primary propagation time is less than a predetermined change threshold, the analyzer 18 determines the space propagation time T based on the primary propagation time.

When the absolute value of the change over time of the primary propagation time is greater than or equal to the predetermined change threshold and an absolute value of a change over time of the secondary propagation time is greater than or equal to the predetermined change threshold, the analyzer 18 determines the space propagation time T based on the primary propagation time.

When the absolute value of the change over time of the primary propagation time is greater than or equal to the predetermined change threshold and the absolute value of the change over time of the secondary propagation time is less than the predetermined change threshold, the analyzer 18 determines the space propagation time T based on the secondary propagation time.

That is, the analyzer 18 determines the direct wave method propagation time $T_\beta$ and the reflected wave method propagation time $T_\alpha$ at a predetermined time interval. Every time the direct wave method propagation time $T_\beta$ is determined, the analyzer 18 subtracts the direct wave method propagation time $T_\beta$ which is previously determined from the direct wave method propagation time $T_\beta$ which is currently determined, to determine a change over time $\beta$ of the direct wave method propagation time $T_\beta$. In addition, the analyzer 18 subtracts the reflected wave method propagation time $T_\alpha$ which is previously determined from the reflected wave method propagation time $T_\alpha$ which is currently determined, to determine a change over time $\alpha$ of the reflected wave method propagation time $T_\alpha$.

When an absolute value of the change over time $\beta$ is less than a predetermined change threshold, the analyzer 18 determines the space propagation time T based on the direct wave method propagation time $T_\beta$, and measures the gas concentration through the direct wave method.

When the absolute value of the change over time $\beta$ is greater than or equal to the predetermined change threshold and an absolute value of the change over time $\alpha$ is greater than or equal to the predetermined change threshold, the analyzer 18 determines the space propagation time T based on the direct wave method propagation time $T_\beta$, and measures the gas concentration through the direct wave method.

When the absolute value of the change over time $\beta$ is greater than or equal to the predetermined change threshold and the absolute value of the change over time $\alpha$ is less than the predetermined change threshold, the analyzer 18 determines the space propagation time T based on the reflected wave method propagation time $T_\alpha$, and measures the gas concentration through the reflected wave method.

(6-2) When direct wave method propagation time $T_\beta$ is greater than or equal to method switching threshold tc

A second process will now be described, which is executed when the direct wave method propagation time $T_\beta$ is greater than or equal to the method switching threshold tc. In the second process, the analyzer 18 recognizes the reflected wave method propagation time $T_\alpha$ as the primary propagation time, and recognizes the direct wave method propagation time $T_\beta$ as the secondary propagation time. The analyzer 18 measures the gas concentration through a process similar to the first process.

When the absolute value of the change over time $\alpha$ is less than a predetermined change threshold, the analyzer 18 determines the space propagation time T based on the reflected wave method propagation time $T_\alpha$, and measures the gas concentration through the reflected wave method.

When the absolute value of the change over time $\alpha$ is greater than or equal to the predetermined change threshold and the absolute value of the change over time $\beta$ is greater than or equal to the predetermined change threshold, the analyzer 18 determines the space propagation time T based on the reflected wave method propagation time $T_\alpha$,

and measures the gas concentration through the reflected wave method.

When the absolute value of the change over time $\alpha$ is greater than or equal to the predetermined change threshold and the absolute value of the change over time $\beta$ is less than the predetermined change threshold, the analyzer 18 determines the space propagation time T based on the direct wave method propagation time $T_\beta$, and measures the gas concentration through the direct wave method.

(6-3) Advantages

According to the process described above, even when the primary propagation time changes rapidly, if the secondary propagation time does not change rapidly, the space propagation time T is determined based on the secondary propagation time. In addition, when both the primary propagation time and the secondary propagation time change rapidly, the space propagation time T is determined based on the primary propagation time. With this configuration, when an error randomly occurs in the primary propagation time, the gas concentration is measured based on the secondary propagation time. Therefore, the errors which occur in the measurement value of the gas concentration due to random occurrence of errors in the primary propagation time can be suppressed.

(7) Others

In the above, an embodiment has been described in which whether the measurement of the gas concentration is to be performed through the direct wave method or the reflected wave method is judged based on comparison between the direct wave method propagation time $T_\beta$ and the method switching threshold tc. Further, in the embodiment described above, whether or not the background process is to be performed is judged based on comparison between the direct wave method propagation time $T_\beta$ and the background process threshold tb. Alternatively, these judgments may be executed based on a value related to the direct wave method propagation time $T_\beta$, in place of the direct wave method propagation time $T_\beta$. For example, these judgments may be executed based on a gas concentration for judgment determined by substituting the direct wave method propagation time $T_\beta$ into Formula (1). That is, the judgment of which of the direct wave method or the reflected wave method is to be used for the measurement of the gas concentration, and the judgment as to whether or not the background process is to be performed, may be executed based on a value related to the direct wave method propagation time $T_\beta$.

In this case, as the thresholds in the judgments, values may be employed which correspond to the value related to the direct wave method propagation time $T_\beta$. For example, when the judgments are to be executed based on the gas concentration for judgment, a method switching threshold hc corresponding to the method switching threshold tc is determined, and a background process threshold hb corresponding to the back ground process threshold tb is determined.

When the gas concentration for judgment is less than or equal to the method switching threshold hc, a condition where the direct wave method propagation time $T_\beta$ is greater than or equal to the method switching threshold tc is satisfied, and, when the gas concentration for judgment is greater than the method switching threshold hc, a condition where the direct wave method propagation time $T_\beta$ is less than the method switching threshold tc is satisfied. Similarly, when the gas concentration for judgment is less than or equal to the background process threshold hb, a condition where the direct wave method propagation time $T_\beta$ is greater than or equal to the background process threshold hb is satisfied, and, when the gas concentration for judgment is greater than the background process threshold hb, a condition where the direct wave method propagation time $T_\beta$ is less than the background process threshold tb is satisfied.

The analyzer 18 measures the gas concentration through the direct wave method when the gas concentration for judgment is greater than the method switching threshold hc, and measures the gas concentration through the reflected wave method when the gas concentration for judgment is less than or equal to the method switching threshold hc. In addition, the analyzer 18 performs the background process when the gas concentration for judgment is less than or equal to the background process threshold hb, and does not perform the background process when the gas concentration for judgment is greater than the background process threshold hb.

REFERENCE SIGNS LIST

10 housing, 14 transmitter, 16 receiver, 18 analyzer, 20 analyzer housing space, 22 concentration measurement space, 24 direct wave reception signal, 26 reflected wave reception signal, 100 gas concentration measurement apparatus.

**Claims**

1. A gas concentration measurement apparatus comprising:

a concentration measurement space in which a concentration of a gas is measured;
a transmitter that transmits ultrasound to the concentration measurement space in response to a transmission signal;
a receiver that receives ultrasound that has propagated through the concentration measurement space, and that outputs a reception signal; and
an analyzer that determines a space propagation time, which is a time of propagation of the ultrasound through the concentration measurement space, based on a point in time at which the transmission signal is input to the transmitter, and a point in time at which the reception signal is output from the receiver, and that determines a concentration of a gas which is a measurement target based on the space propagation time, wherein
the analyzer:

determines, based on a direct wave method propagation time determined through a direct wave method and a reflected wave method propagation time determined through a reflected wave method, a correction value for the direct wave method propagation time; and
determines the space propagation time based on one of a corrected propagation time obtained by correcting the direct wave method propagation time based on the correction value, or the reflected wave method propagation time, according to the direct wave method propagation time or a value related thereto, wherein the direct wave method is a measurement method in which the direct wave method propagation time is determined based on a difference between a point in time of transmission at which the transmission signal is input to the transmitter, and a first point in time of reception at which the reception signal is output from the receiver for a first time after the transmission signal is input to the transmitter, and
the reflected wave method is a measurement method in which the reflected wave method propagation time is determined based on a difference between the first point in time of reception and a second point in time of reception at which the reception signal is output from the receiver for a second time after the transmission signal is input to the transmitter.

2. The gas concentration measurement apparatus according to claim 1, wherein
the analyzer determines the correction value based on the direct wave method propagation time and the reflected wave method propagation time when a condition where the direct wave method propagation time is greater than or equal to a predetermined background process threshold is satisfied.

3. The gas concentration measurement apparatus according to claim 2, wherein
the analyzer determines the space propagation time based on the corrected propagation time when a condition where the direct wave method propagation time is less than a predetermined method switching threshold which is greater than the background process threshold is satisfied.

4. The gas concentration measurement apparatus according to claim 2, wherein
the analyzer determines the space propagation time based on the reflected wave method propagation time when a condition where the direct wave method propagation time is greater than or equal to a predetermined method switching threshold which is greater than the background process threshold is satisfied.

5. A gas concentration measurement apparatus comprising:

a concentration measurement space in which a concentration of a gas is measured;
a transmitter that transmits ultrasound to the concentration measurement space in response to a transmission signal;
a receiver that receives ultrasound that has propagated through the concentration measurement space, and that outputs a reception signal; and
an analyzer that determines a space propagation time, which is a time of propagation of the ultrasound through the concentration measurement space, based on a point in time at which the transmission signal is input to the transmitter, and a point in time at which the reception signal is output from the receiver, and that determines a concentration of a gas which is a measurement target based on the space propagation time, wherein
the analyzer:

determines, based on a direct wave method propagation time determined through a direct wave method and a reflected wave method propagation time determined through a reflected wave method, a correction value for the direct wave method propagation time;
repeatedly executes measurement of propagation time through the direct wave method and the reflected wave method; and

selects one of a corrected propagation time obtained by correcting the direct wave method propagation time based on the correction value, or the reflected wave method propagation time, according to a change over time of the direct wave method propagation time and a change over time of the reflected wave method propagation time, and determines the space propagation time based on the selected one of the corrected propagation time or the reflected wave method propagation time,

the direct wave method being a measurement method in which the direct wave method propagation time is determined based on a difference between a point in time of transmission at which the transmission signal is input to the transmitter, and a first point in time of reception at which the reception signal is output from the receiver for a first time after the transmission signal is input to the transmitter, and

the reflected wave method being a measurement method in which the reflected wave method propagation time is determined based on a difference between the first point in time of reception and a second point in time of reception at which the reception signal is output from the receiver for a second time after the transmission signal is input to the transmitter.

6. The gas concentration measurement apparatus according to claim 5, wherein the analyzer:

recognizes one of the direct wave method propagation time and the reflected wave method propagation time as a primary propagation time, and the other of the direct wave method propagation time and the reflected wave method propagation time as a secondary propagation time, according to the direct wave method propagation time or a value related thereto; and

determines the space propagation time based on the secondary propagation time when an absolute value of a change over time of the primary propagation time is greater than or equal to a predetermined change threshold and an absolute value of a change over time of the secondary propagation time is less than the predetermined change threshold.

7. The gas concentration measurement apparatus according to claim 5, wherein the analyzer:

recognizes one of the direct wave method propagation time and the reflected wave method propagation time as a primary propagation time, and the other of the direct wave method propagation time and the reflected wave method propagation time as a secondary propagation time, according to the direct wave method propagation time or a value related thereto; and

determines the space propagation time based on the primary propagation time when an absolute value of a change over time of the primary propagation time is greater than or equal to a predetermined change threshold and an absolute value of a change over time of the secondary propagation time is greater than or equal to the predetermined change threshold.

8. The gas concentration measurement apparatus according to claim 6 or 7, wherein the analyzer selects the reflected wave method propagation time as the primary propagation time when a condition where the direct wave method propagation time is greater than or equal to a predetermined method switching threshold is satisfied.

9. The gas concentration measurement apparatus according to claim 6 or 7, wherein the analyzer selects the direct wave method propagation time as the primary propagation time when a condition where the direct wave method propagation time is less than a predetermined method switching threshold is satisfied.

EP 4 431 934 A1

FIG. 1

$T_\beta$: DIRECT WAVE METHOD PROPAGATION TIME

DELAY TIME: Td

$T_\alpha$: REFLECTED WAVE METHOD PROPAGATION TIME

24

26

RECEPTION SIGNAL

0

t

t=td

t=t1

t=t2

EP 4 431 934 A1

FIG. 2

FIG. 3

EP 4 431 934 A1

FIG. 4

EP 4 431 934 A1

FIG. 5

EP 4 431 934 A1

**EP 4 431 934 A1**

## INTERNATIONAL SEARCH REPORT

International application No.

**PCT/JP2022/040654**

### A. CLASSIFICATION OF SUBJECT MATTER

***G01N 29/024***(2006.01)i
FI: G01N29/024

According to International Patent Classification (IPC) or to both national classification and IPC

### B. FIELDS SEARCHED

Minimum documentation searched (classification system followed by classification symbols)

G01N29/00-G01N29/52

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 11-352114 A (FUJI INDUSTRIES CO LTD) 24 December 1999 (1999-12-24) | 1-9 |
| A | JP 11-271205 A (CALDON INC) 05 October 1999 (1999-10-05) | 1-9 |
| A | JP 2010-33534 A (PANASONIC ELECTRIC WORKS CO LTD) 12 February 2010 (2010-02-12) | 1-9 |
| A | JP 2017-504807 A (CAMERON INTERNATIONAL CORPORATION) 09 February 2017 (2017-02-09) | 1-9 |
| A | US 5714688 A (THE BABCOCK & WILCOX COMPANY) 03 February 1998 (1998-02-03) | 1-9 |

☐ Further documents are listed in the continuation of Box C.      ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 November 2022 | 06 December 2022 |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/040654**

| Patent document cited in search report | | | Publication date (day/month/year) | Patent family member(s) | | | Publication date (day/month/year) |
|---|---|---|---|---|---|---|---|
| JP | 11-352114 | A | 24 December 1999 | US | 6094987 | A | |
| JP | 11-271205 | A | 05 October 1999 | US | 2001/0039830 | A1 | |
| | | | | EP | 933632 | A2 | |
| | | | | CN | 1233752 | A | |
| | | | | KR | 10-0602227 | B1 | |
| JP | 2010-33534 | A | 12 February 2010 | US | 2010/0259396 | A1 | |
| | | | | WO | 2009/054359 | A1 | |
| | | | | EP | 2214146 | A1 | |
| | | | | CN | 101836244 | A | |
| JP | 2017-504807 | A | 09 February 2017 | US | 2015/0219541 | A1 | |
| | | | | WO | 2015/116358 | A1 | |
| US | 5714688 | A | 03 February 1998 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018100916 A

- JP 2000249691 A